**Europäisches Patentamt**

**European Patent Office**

**Office européen des brevets**

(19)

(11) Veröffentlichungsnummer: **0 014 960**

**A1**

(12) **EUROPÄISCHE PATENTANMELDUNG**

(21) Anmeldenummer: **80100741.0**

(22) Anmeldetag: **14.02.80**

(51) Int. Cl.³: **G 02 B 7/26**

(30) Priorität: **17.02.79 DE 2906104**

(43) Veröffentlichungstag der Anmeldung:
**03.09.80 Patentblatt 80/18**

(84) Benannte Vertragsstaaten:
**AT BE CH FR GB IT LU NL SE**

(71) Anmelder: **HARTING ELEKTRONIK GmbH**
**Postfach 1140**
**D-4992 Espelkamp(DE)**

(72) Erfinder: **Beck, Rasmus, Dr.**
**Nachtigallenstrasse 62**
**D-6078 Neu-Isenburg(DE)**

(72) Erfinder: **Nagel, Hans**
**Untkenbeeke 1**
**D-4952 Porta-Westfalica(DE)**

(74) Vertreter: **Blum, Klaus-Dieter, Dipl.-Ing.**
**Am Römerhof 35**
**D-6000 Frankfurt/Main 90(DE)**

(54) Vorrichtung zum Koppeln zweier Lichtwellenleiter.

(57) In einer Vorrichtung zum Koppeln zweier Lichtwellenleiter (4), die in einem Steckerstift axial ausgerichtet und zentrisch angeordnet sind, wiesen die Lichtwellenleiter am anzukoppelnden Ende eine Gradientenlinse (3) auf. Das anzukoppelnde Ende ist ferner durch ein Kunststoffteil (6) geführt. Durch Verformung des Kunststoffs wird eine Zentrierung des Lichtwellenleiters (4) auf der Gradientenlinse (3) bewirkt. Die Vorderfläche der Gradientenlinse (3) wird mit einem Material (5) belegt dessen Brechungsindex dem mittleren Brechungsindex der Gradientenlinse (3) angepaßt ist und das beim Aneinanderpressen der beiden Gradientenlinsen (3) einem optimalen optischen Kontakt gewährleistet.

Fig 1

EP 0 014 960 A1

- .1

V-64.355-01./52/78

14. Februar 1979

CASCH/SUK

HARTING ELEKTRONIK GmbH, Espelkamp

===============================================

Vorrichtung zum Koppeln zweier Lichtwellenleiter

===============================================

Die Erfindung betrifft eine Vorrichtung zum Koppeln zweier Lichtwellenleiter, die jeweils in einem Steckerstift axial ausgerichtet und zentrisch angeordnet sind und an dem anzukoppelnden Ende einen selbstfokussierenden Teil aufweisen.

Aufgrund ihrer vorteilhaften Eigenschaften werden in der modernen Kommunikationstechnik Lichtwellenleiter als Übertragungsmedium verwendet. Derartige Übertragungsstrecken müssen an bestimmten Stellen leicht auftrennbar sein, um beispielsweise Abzweigungen einzurichten und Reparaturen vorzunehmen. Zur Verbindung der Faserendstücke werden Koppelvorrichtungen vorgesehen, an die besondere Anforderungen zu stellen sind. Die Übertragungsverluste müssen möglichst gering, z.B. weniger als 1 dB, bleiben und die Steckfrequenz sollte ohne Verschlechterung der Eigenschaften genügend hoch sein. Ferner sollte das Koppelelement geringe äußere Abmessungen besitzen, eine einfache Montage auch unter Feldbedingungen ermöglichen und gegen Dejustierungen und Verschmutzung nicht anfällig sein. Hinzu kommt, daß eine solche Koppelverbindung für alle gängigen Fasertypen ohne Erfordernis spezieller Anpaßteile verwendbar sein sollte.

Eine Möglichkeit, zwei Lichtwellenleiter in optischen Kontakt zu bringen, besteht darin, die Fasern genau aufeinander einzurichten und mit optisch hochwertigen Endflächen aufeinander zu pressen. Die dabei einzuhaltenden Toleranzen in bezug auf Faserversatz und Faserseparation liegen im Bereich von wenigen $\mu$m, so daß die erforderliche Präzision und Stabilität der mechanischen Konstruktion schwer zu erzielen sind. So sind z.B. Anordnungen bekannt, bei denen das Faserende in einem präzise bearbeiteten Lagerstein, z.B. Rubin, gefaßt ist. Der Lagerstein selber ist in einer Präzisionshülse aus Metall eingelassen, in die das gesamte Faserende samt Schutzmantel mittels Epoxydharz eingeklebt wird (DE-OS 26 19 625). Diese Anordnung hat den Nachteil, daß für jeden Faserdurchmesser ein eigens angepaßter Lagerstein zur Verfügung stehen muß, wenn die gewünschte Präzision der gegenseitigen Ausrichtung der Fasern erreicht werden soll.

- 3 -

0014960

Bei anderen Konstruktionen wird diese Genauigkeit durch Justieren des Faserendes unter mikroskopischer Beobachtung erreicht oder die abgemantelten Faserenden werden in eine V-Nut eingelegt und mittels mechanischem Druck oder Magnetkraft fixiert (DE-PS 25 31 857, DE-OS 26 46 010).

Eine erhebliche Minderung der Anforderungen an die mechanische Genauigkeit eines optischen Steckverbinders läßt sich erreichen, wenn die beiden Faserenden mittels zweier fokussierender Elemente aufeinander abgebildet werden. Dabei werden diese fokussierenden Elemente, z.B. Koppellinsen, fest mit dem jeweiligen Faserende verbunden, so daß der Brennpunkt der Linse auf der Faserendfläche liegt. Die Trennstelle des Kopplers liegt dann zwischen den beiden Linsen im parallelen Strahlengang. Entsprechende Anordnungen mit Mikrolinsen und Stablinsen sind bekannt (DE-OS 27 11 171, DE-OS 26 06 255, DE-OS 27 22 367, DE-OS 27 03 887). Diese Linsen haben den Nachteil, daß die brechende Wirkung durch gekrümmte Grenzflächen zwischen zwei Medien von unterschiedlichem Brechungsindex, im allgemeinen Glas/Luft, hervorgerufen wird. Es entstehen Reflexionsverluste, die nur durch Bedampfen mit Entspiegelungsschichten vermindert werden können.

Diesen Nachteil weisen Gradientenlinsen nicht auf. Hier sind die Endflächen plan, so daß alle Grenzflächen ohne Luftspalt aufeinander gepaßt werden können. Die Gradientenlinsen werden im allgemeinen zur Ankopplung von optoelektronischen Bauelementen, z.B. Detektoren, lichtemittierenden Dioden, eingesetzt (DE-OS 23 60 951, US-PS 40 60 309).

Bei allen bekannten optischen Koppelsystemen ist die Montage
des Koppelelements an die Faser mit relativ großem Aufwand
verbunden. In vielen Fällen wird die Montage nur im Herstellerwerk vorgenommen, um die erforderliche Genauigkeit
zu gewährleisten.

Der vorliegenden Erfindung liegt daher die Aufgabe zugrunde,
unter Vermeidung der genannten Nachteile bekannter Anordnungen eine Steckverbindung für Lichtwellenleiter anzugeben,
die einerseits eine optimale Ausrichtung auf einer gemeinsamen optischen Achse ermöglicht und andererseits ein problemloses Auftrennen und wieder Zusammenfügen der Faserenden
ohne zusätzliche Justiermaßnahmen gestattet.

Es hat sich nun gezeigt, daß sich diese Aufgabe in technisch
fortschrittlicher Weise lösen läßt, wenn als selbstfokussierender Teil eine Gradientenlinse vorgesehen ist und wenn das
anzukoppelnde Lichtwellenleiterende durch ein Kunststoffteil
geführt ist, welches durch Verformung eine Zentrierung des
Lichtwellenleiters auf der Gradientenlinse bewirkt. Weitere
Verlustminderung und Vereinfachung der Herstellung wird erzielt, wenn die Vorderfläche der Gradientenlinse mit einer
Belegung aus einem Material versehen ist, dessen Brechungsindex dem mittleren Brechungsindex der Gradientenlinse an-

0014960

gepaßt ist und das beim Aneinanderpressen der beiden Gradientenlinsen einen optimalen Kontakt gewährleistet. Weitere vorteilhafte Ausführungsformen der erfindungsgemäßen Vorrichtung sind in den Ansprüchen 3 bis 9 erläutert.

Im folgenden wird die Erfindung anhand von einer lediglich einen Ausführungsweg darstellenden Zeichnung näher beschrieben.

Es zeigt in schematischer Vereinfachung

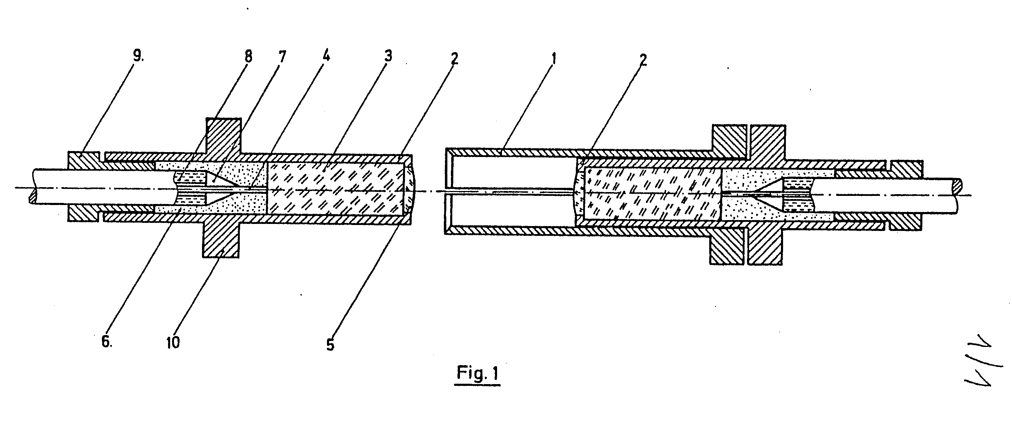

Figur 1    im Querschnitt die erfindungsgemäße Vorrichtung bei ungekoppeltem Zustand der Lichtwellenleiter.

Der erfindungsgemäße Steckverbinder ist im wesentlichen aus drei Teilen zusammengesetzt, nämlich aus einer Federhülse 1 und zwei identischen, die Faserenden enthaltenden Koppelelementen.

Der Aufbau eines Koppelelements geht ebenfalls aus Figur 1 hervor. Es besteht aus dem äußeren Steckerstift 2 von ca. 2 mm Durchmesser, in dem an dem anzukoppelnden Ende ein selbstfokussierendes Glasstäbchen 3, z.B. eine Selfoc-Linse, eingelassen ist. Mittels dieser sogenannten Gradientenlinse wird das aus der Faser 4 austretende divergente Lichtbündel in einen kollimierten Strahl mit größerem Querschnitt umgewandelt. Dieser Strahl wird dann im empfangenden Koppelelement mit einer gleichartigen Gradientenlinse auf die Eintrittsfläche der anzukoppelnden Faser fokussiert. Die Vorderseite dieser Gradientenlinse 3 ist mit einer dünnen Schicht 5 bedeckt. Vorzugsweise besteht diese Belegung aus transparentem Silikonkautschuk und besitzt im ungekoppelten Zustand eine leicht konvexe Außenfläche. Die Silikonschicht 5 schützt die gläserne Endfläche vor Beschädigungen und stellt zugleich einen guten optischen Kontakt zwischen beiden Koppelelementen her. Wenn beim Ankoppeln einer derartigen Verbindung beide Silikonflächen aufeinander gepreßt werden, können Reflexionsverluste weitgehend ausgeschaltet werden.

Auf der Rückseite der Gradientenlinse 3 wird die anzukoppelnde Lichtleitfaser 4 zentrisch aufgesetzt und mit der Glasfläche verkittet. Eine optimale Ankopplung der Faser an die Linse wird durch Verwendung eines Kitts mit angepaßtem Brechungsindex erreicht, z.B. mit einem transparenten Kleber aus Epoxydharz oder Silikongummi. Für eine möglichst gute Übertragung der Lichtwellen von der Faserendfläche an die Linse sollte die Faser plan bearbeitet und optisch poliert sein.

Die Zentrierung der Faser erfolgt mit einem Kunststoffteil 6, das wie die Gradientenlinse 3 in den Steckerstift 2 eingesetzt ist. Dieses Kunststoffteil kann z.B. als Präzisionsspritzgußteil hergestellt werden. Es ist mit einer abgestuften Bohrung 7 versehen. Der Übergang von dem größeren

0014960

zum kleineren Bohrungsteil verläuft konisch. In die engere
Bohrung wird das abgemantelte Faserende eingeführt. Der
Bohrungsdurchmesser ist mit 0,5 mm so bemessen,daß alle herkömmlichen Fasertypen aufgenommen werden können. In die
weitere Bohrung von ca. 1 mm Durchmesser wird die Faser mit
dem Faserschutzmantel 8 aus Nylon oder Tefzel und dgl. eingeführt.

Das Kunststoffteil 6, das vorzugsweise aus einem verformbaren
Material, z.B. Allaton, besteht, wird dann einer kontrollierten Verformung ausgesetzt, mit dem Ziel, den Innendurchmesser
von allen Seiten her gleichmäßig zu verkleinern und sich an
die unterschiedlichen Faserdurchmesser anzupassen. Dadurch
wird das Faserende auf die Endfläche der Gradientenlinse 3
optimal zentriert und eine gute mechanische Fixierung erreicht.

Gemäß einer Ausführungsform erfolgt die Verformung des Kunststoffteils 6 z.B. durch axialen Druck. Zu diesem Zweck wird
eine Druckhülse 9 in den Steckerstift 2 eingeschoben, die
den Kunststoff komprimiert, wodurch sich die Innenwand der
Bohrung eng an das Faserende anlegt.

In einer anderen Ausführungsform wird ein Kunststoffmaterial
verwendet, daß z.B. durch Erwärmen in einen Zustand mit vergrößertem Volumen überführt werden kann, z.B. durch Quellung
oder Aufschäumen. Damit dieser Vorgang möglichst isotrop vor sich geht, wird die Erwärmung in einem geeigneten kleinen Ofen vorgenommen.

Zum Einbau des optischen Koppelelements in ein äußeres Gehäuse ist der Steckerstift 2 mit einem Halteflansch 10 versehen, der entweder integriert oder lösbar als Federring ausgebildet sein kann. Durch die relativ geringen äußeren Abmessungen von ca. 2 mm Durchmesser und 10 mm Länge findet das Koppelelement in fast allen für elektrische Steckverbinder gebräuchlichen Gehäusen, z.B. BNC, SM, Min D, Platz. Dabei wird das Koppelelement schwimmend in das Steckergehäuse eingesetzt. Die Zentrierung beider Koppelelemente einer Steckverbindung aufeinander wird durch eine gesonderte Federhülse 1 übernommen. Diese Federhülse wird auf jeweils eines der beiden Koppelelemente aufgeschoben und zusammen mit diesem in das weibliche Steckergehäuse eingebaut. Sie hat zur Fixierung an einem Ende einen Flanschansatz. Auf diese Weise muß das Steckergehäuse nur noch den mechanischen Schutz der Steckverbindung gewährleisten und braucht hinsichtlich der mechanischen Genauigkeit keinen besonderen Anforderungen mehr zu genügen.

Durch die erfindungsgemäße Vorrichtung ist eine einfache Montage auch unter Feldbedingungen gewährleistet. Die Koppelelemente können komplett im Herstellerwerk vorfabriziert werden. Beim Anschluß des Lichtleiters muß dieser nur noch abgemantelt und mit einer ebenen Endfläche versehen werden.
Mit bekannten üblichen Vorrichtungen kann dieser Arbeitsgang in sehr kurzer Zeit von weniger als einer Minute durchgeführt werden. Das abgemantelte Lichtleiterende wird dann in
die dafür vorgesehene Bohrung des Kunststoffspritzteils eingesetzt. Am Ende der Bohrung wird eine kleine Menge eines
optischen Kitts deponiert, der nun einen guten Kontakt
zwischen der Lichtleiterendfläche und der Endfläche der
Gradientenlinse ermöglicht. Durch die anschließende mechanische Verformung des Kunststoffspritzteils wird der Lichtleiter im Koppelelement zentriert und fixiert. Der gesamte
Montagevorgang dauert etwa 3 Minuten.

Durch die Verwendung einer Koppellinse wird der Querschnitt
des Lichtbündels an der Koppelstelle wesentlich vergrößert.
Dadurch wirken sich Beeinträchtigungen der Koppelfläche
durch Staub, Kratzer usw. nur noch im geringen Maße nachteilig aus. In der erfindungsgemäßen Ausführung des optischen
Steckverbinders wird zudem die der Umgebung ausgesetzte
optische Fläche durch eine Silikonschicht abgedeckt. Diese
wirkt darüberhinaus als Immersionsmedium und verhindert auf
diese Weise fast vollständig die Reflexionsverluste.

Da die Zentrierung und Fixierung der Lichtleitfaser im optischen Koppelelement durch die Verformung eines Elastomer-
Teiles mit einer Bohrung erfolgt, dessen Durchmesser größer
als der Außendurchmesser der Faser ist, kann die erfindungsgemäße Vorrichtung für alle herkömmlichen Faserfabrikate verwendet werden. Daher sind spezielle Anpaßteile, wie bei üblichen Konstruktionen, nicht notwendig.

Die erfindungsgemäße Steckverbindung ist bereits ohne äußeres Gehäuse verwendbar, da die gegenseitige Ausrichtung der Koppelelemente durch die Federhülse übernommen ist. So kann die Steckverbindung nach Sicherung durch einen Schrumpfschlauch als semipermanente Verbindung eingesetzt werden. Beim Einsatz als lösbarer Steckverbinder wird die Anordnung schwimmend in ein geeignetes Steckergehäuse eingebaut, das dann nur noch die mechanische Verriegelung und die Zugentlastung des äußeren Kabelmantels übernehmen muß.

V-64.355-01./52/78

CASCH/SUK

14. Februar 1979

HARTING ELEKTRONIK GmbH, Espelkamp

Patentansprüche

1. Vorrichtung zum Koppeln zweier Lichtwellenleiter, die jeweils in einem Steckerstift axial ausgerichtet und zentrisch angeordnet sind und an dem anzukoppelnden Ende einen selbstfokussierenden Teil aufweisen, dadurch gekennzeichnet, daß als selbstfokussierender Teil eine Gradientenlinse (3) vorgesehen ist und daß das anzukoppelnde Lichtwellenleiterende durch ein Kunststoffteil (6) geführt ist, welches durch Verformung eine Zentrierung des Lichtwellenleiters (4) auf der Gradientenlinse (3) bewirkt.

2. Vorrichtung nach Anspruch 1, <u>dadurch gekennzeichnet</u>, daß auf der Vorderfläche der Gradientenlinse (3) eine Belegung (5) aus einem Material vorgesehen ist, dessen Brechungsindex dem mittleren Brechungsindex der Gradientenlinse (3) angepaßt ist und das beim Aneinanderpressen der beiden Gradientenlinsen (3) einen optimalen optischen Kontakt gewährleistet.

3. Vorrichtung nach Anspruch 2, <u>dadurch gekennzeichnet</u>, daß die Belegung (5) aus transparentem Silikonkautschuk besteht und daß sie in ungekoppeltem Zustand eine leicht konvexe Außenfläche besitzt.

4. Vorrichtung nach einem der Ansprüche 1 bis 3, <u>dadurch gekennzeichnet</u>, daß das Kunststoffteil (6) zur Einführung der Lichtwellenleiter (4) zentrisch eine abgestufte Bohrung (7) besitzt, deren Durchmesser größer ist als der Außendurchmesser des Lichtwellenleiters (4) und daß der Übergang von dem größeren zum kleineren Bohrungsteil konisch verläuft.

5. Vorrichtung nach einem der Ansprüche 1 bis 4, <u>dadurch gekennzeichnet</u>, daß zur Zentrierung des Lichtwellenleiters (4) das Kunststoffteil (6) durch Ausübung eines axialen Drucks radial verformbar ist.

6. Vorrichtung nach einem der Ansprüche 1 bis 4, dadurch gekennzeichnet, daß zur Zentrierung des Lichtwellenleiters (4) das Volumen des Kunststoffteils (6) durch Wärmeeinwirkung vergrößerbar ist.

7. Vorrichtung nach einem der Ansprüche 1 bis 6, dadurch gekennzeichnet, daß der Steckerstift (2) an dem faserseitigen Ende durch eine Druckhülse (9) abgeschlossen ist.

8. Vorrichtung nach einem der Ansprüche 1 bis 7, dadurch gekennzeichnet, daß zur Fixierung des Steckerstifts (2) in einem üblichen Steckergehäuse an dem Steckerstift ein Halteflansch (10) vorgesehen ist.

9. Vorrichtung nach einem der Ansprüche 1 bis 8, dadurch gekennzeichnet, daß die Kopplung beider Steckerstifte (2) durch eine Federhülse (1) bewirkt wird.

9. 8 7 4 3 2 1 2

6. 10 5

Fig. 1

1/1

0014960

Europäisches
Patentamt

**EUROPÄISCHER RECHERCHENBERICHT**

Nummer der Anmeldung

EP 80 10 0741

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | DE - A1 - 2 828 989 (INTERNATIONAL STANDARD ELECTRIC CORP.) <br> * Anspruch 1 * <br> -- | 1 | G 02 B 7/26 |
| | US - A - 3 829 195 (E.G. RAWSON) <br> * fig. 1 * <br> -- | 1 | |
| | DE - A1 - 2 648 652 (WESTERN ELECTRIC CO.) <br> * Ansprüche 1 bis 3 * <br> -- | 2,3 | **RECHERCHIERTE SACHGEBIETE (Int. Cl.3)** |
| | GB - A - 1 499 359 (STANDARD TELEPHO- NES AND CABLES LTD.) <br> * Anspruch 3 * <br> -- | 4 | G 02 B 7/26 |
| | DE - A1 - 2 614 401 (THOMSON-CSF) <br> * Fig. 2 * <br> -- | 4,5,7 | |
| A | US - A - 3 937 557 (A.F. MILTON) <br> * Fig. 1 * <br> -- | 1 | |
| D,A | DE - A1 - 2 360 951 (SIEMENS AG) <br> * Fig. 2 * <br> ---- | | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patent- familie, übereinstimmendes Dokument |

X Der vorliegende Recherchenbericht wurde für alle Patentansprüche erstellt.

| Recherchenort | Abschlußdatum der Recherche | Prüfer |
|---|---|---|
| Berlin | 23-05-1980 | FUCHS |

EPA form 1503.1  06.78